(19) **Europäisches Patentamt**
**European Patent Office**
**Office européen des brevets**

(11) **EP 4 693 609 A1**

(12) **EUROPEAN PATENT APPLICATION**
published in accordance with Art. 153(4) EPC

(43) Date of publication:
**11.02.2026 Bulletin 2026/07**

(51) International Patent Classification (IPC):
*H01M 10/613* (2014.01)    *H01M 10/6567* (2014.01)

(21) Application number: **24802498.6**

(52) Cooperative Patent Classification (CPC):
Y02E 60/10

(22) Date of filing: **03.01.2024**

(86) International application number:
**PCT/CN2024/070431**

(87) International publication number:
**WO 2024/230209 (14.11.2024 Gazette 2024/46)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **11.05.2023 CN 202321135535 U**

(71) Applicant: **Sunwoda Mobility Energy Technology Co., Ltd.**
**Shenzhen, Guangdong 518107 (CN)**

(72) Inventors:
• **LI, Minghua**
**Shenzhen, Guangdong 518107 (CN)**
• **ZHAO, Min**
**Shenzhen, Guangdong 518107 (CN)**
• **DENG, Jie**
**Shenzhen, Guangdong 518107 (CN)**
• **ZONG, Fucai**
**Shenzhen, Guangdong 518107 (CN)**

(74) Representative: **Elzaburu S.L.P.**
**Edificio Torre de Cristal**
**Paseo de la Castellana 259 C, planta 28**
**28046 Madrid (ES)**

(54) **BATTERY MODULE AND BATTERY PACK**

(57)    The present application discloses a battery module and a battery pack. The battery module has a first direction, a second direction and a third direction that intersect with each other pairwise. The battery module includes a plurality of single cells and a protective casing. The protective casing includes a top cover, a first end plate, a second end plate and a plurality of side plates, where the first end plate and the second end plate are arranged at intervals along the first direction; the plurality of side plates are arranged at intervals along the second direction and connected between the first end plate and the second end plate; the top cover is connected to a same side of the first end plate, the second end plate and the two side plates along the third direction, and together they define an accommodating cavity. The plurality of single cells are arranged in the accommodating cavity along the first direction, and the single cells are connected to the side plates; the single cells at two end abut against the first end plate and the second end plate respectively. Where, a total weight of the plurality of single cells is $M_1$ kg, and a weight of the protective casing is $M_2$ kg, satisfying: $0.05 \leq M_2/M_1 \leq 0.25$.

FIG. 1

## Description

The present application claims priority to Chinese Patent Application No. 202321135535.0 filed with China National Intellectual Property Administration on May 11, 2023 and entitled "Battery Module and Battery Pack", which is hereby incorporated by reference in its entirety.

## TECHNICAL FIELD

The present application relates to the technical field of battery manufacturing, in particular to a battery module and a battery pack.

## BACKGROUND

With the development of new energy vehicles, people's requirements for new energy vehicles are getting higher and higher.

In the process of continuous optimization of new energy vehicles, the weight of new energy vehicles is also increasing, where, in order to improve the endurance of new energy vehicles, technicians often increase the capacity of the battery module, which also leads to the larger weight of the battery module, which in turn leads to the larger weight of new energy vehicles.

## SUMMARY

Embodiments of the present application provide a battery module and a battery pack, so as to solve the problem in the related art that the weight of the new energy vehicle increases due to large weight of the battery module.

In order to solve the above technical problem, the present application is implemented as follows.

In a first aspect, an embodiment of the present application provides a battery module, the battery module has a first direction, a second direction and a third direction that intersect with each other pairwise; the battery module includes a plurality of single cells and a protective casing; the protective casing includes a top cover, a first end plate, a second end plate and a plurality of side plates; the first end plate and the second end plate are arranged at intervals along the first direction; the plurality of side plates are arranged at intervals along the second direction and connected between the first end plate and the second end plate; the top cover is connected to a same side of the first end plate, the second end plate and the plurality of side plates along the third direction, and together they define an accommodating cavity;

the plurality of single cells are arranged in the accommodating cavity along the first direction, and the single cells are connected to the side plates; the single cells at two end parts abut against the first end plate and the second end plate respectively;

where, a total weight of the plurality of single cells is $M_1$ kg, and a weight of the protective casing is $M_2$ kg, satisfying: $0.05 \leq M_2/M_1 \leq 0.25$.

Optionally, $M_1$ satisfies: $5 \leq M_1 \leq 30$.

Optionally, $M_2$ satisfies: $0.25 \leq M_2 \leq 7.5$.

Optionally, $M_1$ satisfies: $5 \leq M_1 \leq 30$, and $M_2$ satisfies: $0.25 \leq M_2 \leq 7.5$.

Optionally, the plurality of single cells have a first end surface and a second end surface that are oppositely arranged along the first direction; a distance between the first end surface and the second end surface is $D_1$ mm, and a minimum distance between the first end plate and the second end plate along the first direction is $D_2$ mm, satisfying: $1 \leq D_1/D_2 \leq 1.1$.

Optionally, an adhesive layer is provided between the single cell and the side plate.

Optionally, an adhesive strength of the adhesive layer includes a tensile strength $W_1$ MPa and a shear strength $W_2$ MPa, satisfying: $W_1/M_1 \geq 0.1$, $W_2/M_1 \geq 0.1$.

Optionally, a weight of the adhesive layer is $M_3$ g, and a weight of the single cell is $M_4$ kg, satisfying the following relationship: $0.2 \leq M_3/M_4 \leq 5$.

Optionally, two ends of the side plate are respectively welded and fixed to the first end plate and the second end plate;

where a first welding strength between the first end plate and the side plate is $F_1$ MPa, and a second welding strength between the second end plate and the side plate is $F_2$ MPa, satisfying: $F_1/M_1 \geq 0.2$, and $F_2/M_1 \geq 0.2$.

Optionally, the first end plate generates a pre-tightening force of $F_3$ kN to the plurality of single cells, and the second end plate generates a pre-tightening force of $F_4$ kN to the plurality of single cells, satisfying: $0.01 \leq F_3/M_1 \leq 0.3$, and $0.01 \leq F_4/M_1 \leq 0.3$.

Optionally, a buffer pad is provided between at least some adjacent two single cells.

Optionally, the side plate includes a main body and a first bent structure on a side close to the top cover; the first bent structure extends from the main body toward a direction close to the top cover and snap-engages with the top cover.

Optionally, at least one of the main body and the first bent structure is provided with an insulating film, and the insulating film is bonded to the single cell.

Optionally, the insulating film has a second bent structure corresponding to the first bent structure, and the second bent structure is located between the first bent structure and the single cell.

Optionally, the battery module further includes an insulating separator, and the insulating separator is arranged between the single cell close to the first end plate and the first end plate.

Optionally, the battery module further includes an insulating separator, and the insulating separator is arranged between the single cell close to the second end plate and the second end plate.

Optionally, the battery module further includes insulating separators, and the insulating separators are arranged between the single cell close to the first end plate and the first end plate, and between the single cell close to the second end plate and the second end plate.

In a second aspect, an embodiment of the present application provides a battery pack, the battery pack includes an enclosing box and the battery module according to any one option of the above first aspect, and the battery module is located in the enclosing box.

Optionally, the battery pack includes a liquid cooling plate; the liquid cooling plate is arranged on a side of the single cell away from the top cover, and the liquid cooling plate is bonded to the single cell through a thermal conductive adhesive.

In the embodiments of the present application, the battery module includes a plurality of single cells and a protective casing, where the protective casing includes first and second end plates arranged at intervals along a first direction, two side plates arranged at intervals along a second direction, and a top cover. The top cover is connected to a same side of the first end plate, the second end plate, and the two side plates along a third direction, so that the top cover, the first end plate, the second end plate, and the two side plates may define an accommodating cavity. The plurality of single cells may be arranged in the accommodating cavity along the first direction and connected to the side plates. Among the plurality of single cells, the single cells at two ends may abut against with the first end plate and the second end plate respectively, so that the plurality of single cells may be located in the protective casing to form the battery module. A total weight of the plurality of single cells is $M_1$ kg, and a weight of the protective casing is $M_2$ kg, where $0.05 \leq M_2/M_1 \leq 0.25$. This enables the protective casing to protect the single cells, and also allows the protective casing to have a relatively small weight, thereby enabling the battery module to have a relatively small weight, reducing the impact of the battery module on the weight of the new energy vehicle, and avoiding the problem that the weight of the new energy vehicle is relatively large due to the arrangement of the battery module. In this way, the gravimetric energy density and safety of the battery pack can be balanced.

The above description is merely an overview of the technical solution of the present application. In order to understand the technical means of the present application more clearly and to facilitate implementation in accordance with the content of the description, and, in order to enable the above and other objectives, features, and advantages of the present application more obvious and understandable, specific embodiments of the present application are specifically set forth below.

## BRIEF DESCRIPTION OF DRAWINGS

To describe the technical solutions of the present application or in the prior art more clearly, the following briefly introduces the accompanying drawings needed for describing the embodiments or the prior art. Apparently, the accompanying drawings in the following description are some embodiments of the present application, and for persons of ordinary skill in the art, they may still obtain other drawings from these accompanying drawings without creative effort.

FIG. 1 is a first schematic structural diagrams of a battery module provided in an embodiment of the present application.

FIG. 2 is a second schematic structural diagram of a battery module provided in an embodiment of the present application.

FIG. 3 is a schematic structural diagram of a protective casing provided in an embodiment of the present application.

FIG. 4 is a schematic structural diagram of a plurality of single cells and a third end plate provided in an embodiment of the present application.

FIG. 5 is a schematic structural diagram of a battery pack provided in an embodiment of the present application.

FIG. 6 is a schematic structural diagram of a side plate and an insulating film provided in an embodiment of the present application.

Explanation of reference signs:
100: battery module; 110: single cell; 120: protective casing; 121: top cover; 1211: first top cover; 1212: second top cover; 1213: snap fastener; 122: first end plate; 123: second end plate; 124: side plate; 1241: first bent structure; 1242: insulating film; 12421: second bent structure; 12422: first part; 12424: second part; 12423: connecting part; 125: accommodating cavity; 130: third end plate; 140: electrical component; 150: insulating separator; 200: liquid cooling plate; 111: first end surface; 112: second end surface; 1243: adhesive layer; 113: buffer pad; 1240: main body; 300: enclosing box; 201: thermal conductive adhesive.

## DESCRIPTION OF EMBODIMENTS

To make the objectives, technical solutions, and advantages of the present application clearer, the following clearly and comprehensively describes the technical solutions of the present application with reference to the accompanying drawings of the present application. Apparently, the described embodiments are some rather than all embodiments of the present application. All other embodiments obtained by persons of ordinary skill in the art based on the embodiments of the present application without creative effort shall fall within the protection scope of the present application.

It should be noted that when an element is referred to as being "fixed to" or "arranged at" another element, it may be directly on the other element or there may be an intermediate element between them. When an element is considered to be "connected" to another element, it may be directly connected to the other element or there may be an intermediate element at the same time between them. The terms "vertical", "horizontal", "upper", "lower", "left", "right" and similar expressions used herein are for illustrative purposes only and do not represent the only implementation manner.

In the embodiments of the present application, "parallel" refers to a state where an angle formed between lines, between a line and a surface, or between surfaces is -1° to 1°. In addition, "vertical" refers to a state where an angle formed between lines, between a line and a surface, or between surfaces is 89°-91°. "Equal distance" refers to a state where a tolerance range is -1% to 1%.

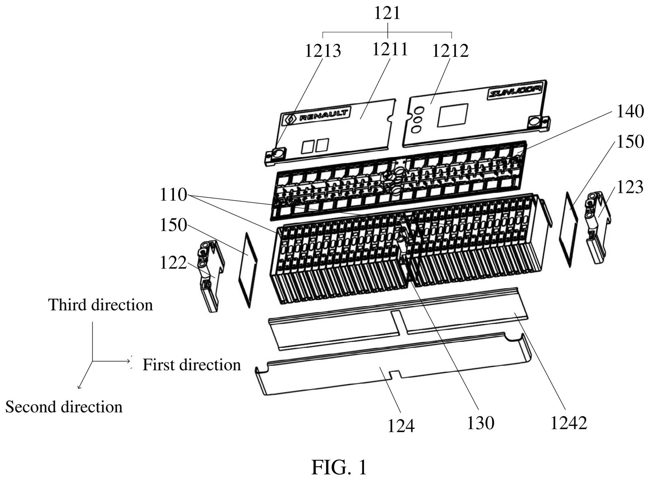

As shown in FIGS. 1 to 6, the battery module 100 has a first direction, a second direction, and a third direction that intersect with each other pairwise. The battery module 100 includes a plurality of single cells 110 and a protective casing 120. The protective casing 120 includes a top cover 121, a first end plate 122, a second end plate 123, and a plurality of side plates 124. The first end plate 122 and the second end plate 123 are arranged at intervals along the first direction. The plurality of side plates 124 are arranged at intervals along the second direction and connected between the first end plate 122 and the second end plate 123. The top cover 121 is connected to a same side of the first end plate 122, the second end plate 123, and the plurality of side plates 124 along the third direction, and together they define an accommodating cavity 125. The plurality of single cells 110 are arranged in the accommodating cavity 125 along the first direction, and the single cells 110 are connected to the side plates 124. The single cells 110 at two ends abut against the first end plate 122 and the second end plate 123 respectively. Where, a total weight of the plurality of single cells 110 is $M_1$ kg, and a weight of the protective casing 120 is $M_2$ kg, satisfying: $0.05 \leq M_2/M_1 \leq 0.25$. Where, the single cells 110 at two ends abut against the first end plate 122 and the second end plate 123 respectively; specifically, among the plurality of single cells 110 arranged in the accommodating cavity 125 along the first direction, the outermost single cells 110 along the first direction are the single cells 110 at the two ends.

In this embodiment of the present application, the battery module 100 includes a plurality of single cells 110 and a protective casing 120. The protective casing 120 includes a first end plate 122 and a second end plate 123 arranged at intervals along the first direction; a plurality of side plates 124 arranged at intervals along the second direction; and a top cover 121. The top cover 121 is connected to a same side of the first end plate 122, the second end plate 123, and the plurality of side plates 124 along the third direction, so that the top cover 121, the first end plate 122, the second end plate 123, and the plurality of side plates 124 may define an accommodating cavity 125. The plurality of single cells 110 may be arranged in the accommodating cavity 125 along the first direction and connected to the side plates 124. Among the plurality of single cells 110, the single cells 110 at two ends may abut against the first end plate 122 and the second end plate 123 respectively, so that the plurality of single cells 110 may be located in the protective casing 120 to form the battery module 100. A total weight of the plurality of single cells 110 is $M_1$ kg, and a weight of the protective casing 120 is $M_2$ kg, where $0.05 \leq M_2/M_1 \leq 0.25$. This enables the protective casing 120 to protect the single cells 110, and also allows the protective casing 120 to have a relatively small weight, thereby enabling the battery module 100 to have a relatively small weight, reducing the impact of the battery module 100 on the weight of the new energy vehicle, avoiding the problem that the weight of the new energy vehicle is relatively large due to the arrangement of the battery module 100, and thereby balancing the safety and gravimetric energy density of the battery pack.

It should be noted that in the embodiments of the present application, the protective casing 120 includes a first end plate 122, a second end plate 123, a plurality of side plates 124, and a top cover 121. The top cover 121 is connected to the same side of the first end plate 122, the second end plate 123, and the plurality of side plates 124 along the third direction. The accommodating cavity 125 formed by the connection of the top cover 121, the first end plate 122, the second end plate 123, and the plurality of side plates 124 is a non-closed accommodating cavity 125. Compared with the case where the protective casing 120 further includes a bottom plate that is connected with other components to form a closed accommodating cavity 125, the present application is equivalent to omitting the provision of the bottom plate, that is, no structure similar to the bottom plate is provided on the first end plate 122 in a direction opposite to the third direction. This directly reduces the components of the protective casing 120, directly reducing the weight of the protective casing 120, and can facilitate the weight of the plurality of single cells 110 and the weight of the protective casing 120 to satisfy the relationship of $0.05 \leq M_2/M_1 \leq 0.25$, so as to realize the lightweight design of the battery module 100 and also reduce costs.

In the present embodiment, the number of the side plates 124 is two; in other embodiments, the number of the side plates 124 may be more than two, which is not limited herein.

It should also be noted that the specific value of $M_2/M_1$ may be set according to actual conditions. For example, $M_2/M_1 = 0.1$ may be set; in this case, the weight of the protective casing 120 is 0.1 times the weight of the plurality of single cells 110. When the weight of the single cells 110 in the battery module 100 is fixed, the weight of the protective casing 120 may be kept relatively small, reducing the weight of the battery module 100, thereby reducing the impact of the battery module 100 on the weight of the new energy vehicle. Certainly, $M_2/M_1$ may also be set to any value among 0.05, 0.07, 0.09, 0.1, 0.13, 0.15, 0.17, 0.19, 0.2, 0.22 and 0.25, or a range composed of any two of these values.

In some embodiments, $0.08 \leq M_2/M_1 \leq 0.23$.

In some embodiments, $0.08 \leq M_2/M_1 \leq 0.21$.

In some embodiments, $0.09 \leq M_2/M_1 \leq 0.20$.

In addition, in some embodiments, $M_1$ may satisfy: $5 \leq M_1 \leq 30$.

It can be understood that $5 \leq M_1 \leq 30$ means that the total weight of the plurality of single cells 110 is greater than or equal to 5 kg and less than or equal to 30 kg. The number of the single cells 110 in the battery module 100 may be set accordingly, so that the single cells 110 may meet the normal operation of the vehicle, without arranging too many single cells 110 to increase the weight of the vehicle. At this time, according to the relationship between $M_2$ and $M_1$, i.e., $0.05 \leq M_2/M_1 \leq 0.25$, the mass of the protective casing 120 may be set based on the total weight of the plurality of single cells 110. For example, when $M_1 = 10$ kg, $M_2$ may be set to $0.4 \leq M_2 \leq 2$; when $M_2/M_1 = 0.1$, $M_2$ may be specifically 1 kg. $M_1$ may also be other values, such as 6, 7, 8, 12, 26, or a value between any two of these values, etc. The specific value of $M_1$ is not specifically limited in the embodiments of the present application.

In addition, in some embodiments, $M_2$ may satisfy: $0.25 \leq M_2 \leq 7.5$.

It can be understood that $0.25 \leq M_2 \leq 7.5$ means that the weight of the protective casing 120 is greater than or equal to 0.25 kg and less than or equal to 7.5 kg. The first end plate 122, the second end plate 123, the side plates 124, and the top cover 121 may be set accordingly, so that the protective casing 120 may fulfill the function of protecting the single cells 110. At this time, according to the relationship between $M_2$ and $M_1$, i.e., $0.05 \leq M_2/M_1 \leq 0.25$, the total weight of the plurality of single cells 110 may be calculated based on the weight of the protective casing 120, and then the number of the single cells 110 may be further set. For example, when $M_2 = 1$ kg, $M_1$ may be set to $4 \leq M_1 \leq 20$; when $M_2/M_1 = 0.1$, $M_1$ may be specifically 10 kg. $M_2$ may also be other values, such as 0.3, 0.4, 2, 0.7, or a value between any two of these values, etc. The specific value of $M_2$ is not specifically limited in the embodiments of the present application. In the embodiments of the present application, at least one of $M_2$ and $M_1$ may satisfy the above numerical range; if one of $M_2$ and $M_1$ satisfies the above numerical range, the specific value of the other may be obtained through calculation, or $M_2$ satisfies $0.25 \leq M_2 \leq 7.5$ while $M_1$ satisfies $5 \leq M_1 \leq 30$. Which one of $M_2$ and $M_1$ specifically satisfies the above numerical range is not specifically limited in the embodiments of the present application.

In addition, in some embodiments, $M_1$ may satisfy: $5 \leq M_1 \leq 30$, and $M_2$ may satisfy: $0.25 \leq M_2 \leq 7.5$.

In some embodiments, $M_1$ may satisfy: $8 \leq M_1 \leq 25$.

In some embodiments, $M_2$ may satisfy: $0.62 \leq M_2 \leq 6.6$.

In some embodiments, $M_1$ may satisfy: $8 \leq M_1 \leq 25$, and $M_2$ may satisfy: $0.62 \leq M_2 \leq 6.6$.

In other embodiments, $M_1$ may satisfy: $11 \leq M_1 \leq 21$, so as to better balance the gravimetric energy density and structural strength of the battery pack.

In other embodiments, $M_2$ may satisfy: $0.81 \leq M_2 \leq 5.3$, so as to better balance the gravimetric energy density and structural strength of the battery pack.

In other embodiments, $M_1$ may satisfy: $11 \leq M_1 \leq 21$, and meanwhile $M_2$ may satisfy: $0.81 \leq M_2 \leq 5.3$, so as to better balance the gravimetric energy density and structural strength of the battery pack.

In addition, in some embodiments, as shown in FIGS. 1, 3, and 4, the plurality of single cells 110 have a first end surface 111 and a first end surface 112 that are oppositely arranged along the first direction; a distance between the first end surface 111 and the first end surface 112 may be $D_1$ mm; a minimum distance between the first end plate 122 and the second end plate 123 along the first direction may be $D_2$ mm, satisfying: $1 \leq D_1/D_2 \leq 1.1$.

The plurality of single cells 110 have a first end surface 111 and a first end surface 112 that are oppositely arranged in the first direction, and there is a distance of $D_1$ mm between the first end surface 111 and the first end surface 112. Since the first end plate 122 and the second end plate 123 are arranged at intervals along the first direction, there is a distance between the first end plate 122 and the second end plate 123, and a minimum distance between the first end plate 122 and the second end plate 123 along the first direction is $D_2$ mm, where $1 \leq D_1/D_2 \leq 1.1$. Within this range, the plurality of single cells 110 may be arranged between the first end plate 122 and the second end plate 123, and it is convenient for the single cells 110 at two ends in the plurality of single cells 110 to be abutted against the first end plate 122 and the second end plate 123.

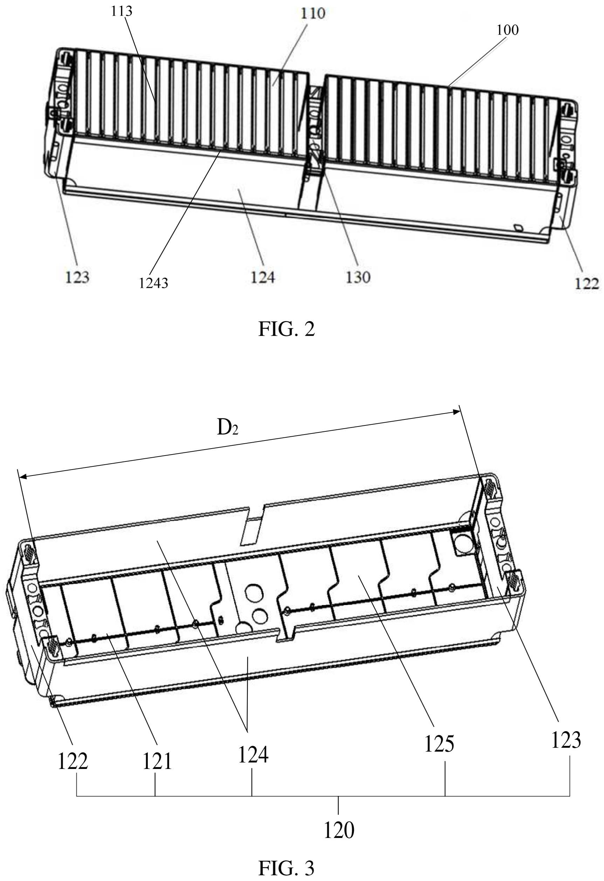

In addition, in some embodiments, as shown in FIG. 2, an adhesive layer 1243 may be provided between the single cell 110 and the side plate 124.

An adhesive layer 1243 is provided between the single cell 110 and the side plate 124, and the single cell 110 and the side plate 124 may be bonded through the adhesive layer 1243 to realize the connection between the single cell 110 and the side plate 124, so that the single cell 110 may be fixed in the accommodating cavity 125, enabling the protective casing 120 to better protect the single cell 110.

It should be noted that the adhesive layer 1243 may be a two-liquid-component mixed curing adhesive (AB glue) layer; one liquid component of the AB glue is a base adhesive, and the other liquid component is a curing agent; the two liquid components may cure when mixed, to achieve adhesion. Certainly, the adhesive layer 1243 may also be formed by other adhesives, such as acrylate sealant, epoxy sealant, silicone sealant, etc. The specific type of the adhesive layer 1243 is not specifically limited in the embodiments of the present application.

In some embodiments, a weight of the adhesive layer 1243 is $M_3$ g, and a weight of the single cell 110 is $M_4$ kg, both of which satisfy the following relationship: $0.2 \leq M_3/M_4 \leq 5$. Where, $M_4$ is the weight of one single cell 110. When $M_3/M_4$ is greater than 5, the weight of the adhesive layer 1243 is too large, resulting in that the weight proportion of the adhesive layer 1243 in the entire battery module 100 is relatively large, thereby affecting the energy density of the battery module 100. When $M_3/M_4$ is less than 0.2, the weight of the single cell 110 is too large, and much larger than the weight of the adhesive layer 1243; at this time, the adhesive layer 1243 cannot firmly bond the single cell 110 to the side plate 124; affecting the connection reliability between the single cell 110 and the side plate 124. Controlling the weight of the single cell 110 and the weight of the adhesive layer 1243 within the above range may balance the connection reliability between the single cell 110 and the side plate 124 and the overall energy density of the battery module 100.

In other embodiments, it is $0.8 \leq M_3/M_4 \leq 4$, and more preferably, $1.2 \leq M_3/M_4 \leq 3.3$.

In addition, in some embodiments, the adhesive strength of the adhesive layer 1243 may include a tensile strength $W_1$ MPa and a shear strength $W_2$ MPa, satisfying: $W_1/M_1 \geq 0.1$, $W_2/M_1 \geq 0.1$.

The adhesive strength of the adhesive layer 1243 includes a tensile strength $W_1$ MPa and a shear strength $W_2$ MPa, where the tensile strength $W_1$ satisfies the relationship of $W_1/M_1 \geq 0.1$, and the shear strength $W_2$ satisfies the relationship of $W_2/M_1 \geq 0.1$. Since the adhesive layer 1243 is used to connect the single cell 110 with the side plate 124, and the protective casing 120 is not provided with a structure capable of carrying the single cell 110 in the opposite direction of the third direction, the adhesive layer 1243 may also bear the force exerted by the single cell 110 on the adhesive layer 1243, and the adhesive layer 1243 is prone to being pulled under the action of the single cell 110. When the tensile strength $W_1$ and the shear strength $W_2$ satisfy the above relationships, the adhesive layer 1243 may bear at least part of the force exerted by the single cell 110, which can avoid the problem that the connection effect between the single cell 110 and the side plate 124 is poor caused by the fact that the adhesive layer 1243 is easy to fall off when the single cell 110 and the side plate 124 are connected through the adhesive layer 1243.

Where, the tensile strength may be measured with reference to the following method:

1) apply a first test force along a direction parallel to an overlapping direction of the single cell 110 and the side plate 124 by a tension measuring device such as a tension meter until the single cell 110 is separated from the side plate 124; repeat the above operation multiple times, and take an average value of the multiple first test forces as $f_1$;
2) measure and calculate an area of a fracture surface between the single cell 110 and the side plate 124 by a length measuring tool such as a vernier caliper or a ruler; repeat this process multiple times and take an average value as $S_1$;
3)

$$\text{tensile strength} = f_1/S_1.$$

The shear strength may be measured with reference to the following method:

1) apply a second test force along a direction perpendicular to an overlapping direction of the single cell 110 and the side plate 124 by a tension measuring device such as a tension meter until the single cell 110 is separated from the side plate 124; repeat the above operation multiple times, and take an average value of the multiple second test forces as $f_2$;
2) measure and calculate an area of a fracture surface between the single cell 110 and the side plate 124 by a length measuring tool such as a vernier caliper or a ruler; repeat this process multiple times and take an average value as S2;
3)

$$\text{tensile strength} = f_2/S_2.$$

In addition, in some embodiments, two ends of the side plate 124 may be welded and fixed to the first end plate 122 and the second end plate 12 respectively 3; where, a first welding strength between the first end plate 122 and the side plate 124 is $F_1$ MPa, and a second welding strength between the second end plate 123 and the side plate 124 is $F_2$ MPa, satisfying: $F_1/M_1 \geq 0.2$, and $F_2/M_1 \geq 0.2$; where, the first end plate 122 may generate a pre-tightening force $F_3$ kN on the plurality of single cells 110, and the second end plate 123 may generate a pre-tightening force $F_4$ kN on the plurality of single cells 110, satisfying: $0.01 \leq F_3/M_1 \leq 0.3$, and $0.01 \leq F_4/M_1 \leq 0.3$.

Where, the welding strength may be measured with reference to the following method:

1) apply a third test force along a direction perpendicular to an overlapping direction of the end plate and the side plate by a tension measuring device such as a tension meter until the end plate is separated from the side plate; repeat the above operation multiple times, and take an average value of the multiple third test forces as $f_3$;
2) measure and calculate an area of a fracture surface between the end plate and the side plate by a length measuring tool such as a vernier caliper or a ruler; repeat this process multiple times and take an average value as $S_3$;
3)

$$\text{welding strength} = f_3/S_3.$$

Two ends of the side plate 124 are welded and fixed to the first end plate 122 and the second end plate 123, respectively; therefore, the first end plate 122 and the second end plate 123 may be constrained by the side plate 124 in the first direction due to welding, so that the first end plate 122 has a force toward the second end plate 123, and the second end plate 123 has a force toward the first end plate 122. When the single cell 110 abuts against the first end plate 122 and the second end plate 123, the first end plate 122 may exert a pre-tightening force $F_3$ toward the second end plate 123 on the single cell 110, and the second end plate 123 may exert a pre-tightening force $F_4$ toward the first end plate 122 on the single cell 110. The pre-tightening force $F_3$ and the pre-tightening force $F_4$ satisfy $0.01 \leq F_3/M_1 \leq 0.3$, and $0.01 \leq F_4/M_1 \leq 0.3$; when the single cell 110 is placed in the accommodating cavity 125, the first end plate 122 and the second end plate 123 may pre-tighten the single cell 110, generating a clamping-like force, so that the single cell 110 may be located between the first side plate 124 and the second side plate 124, which can avoid the problem that the single cell 110 is easy to detach from the accommodating cavity 125 due to that the protective casing 120 is not provided with a structure capable of carrying the single cell 110 in the opposite direction of the third direction.

Where, the first welding strength between the first end plate 122 and the side plate 124 is $F_1$ MPa, and the second welding strength between the second end plate 123 and the side plate 124 is $F_2$ MPa; since $F_1/M_1 \geq 0.2$ and $F_2/M_1 \geq 0.2$, the side plate 124, the first end plate 122, and the second end plate 123 may bear the weight of the single cell 110, may support the single cell 110, and avoid the problem that a welding relationship between the side plate 124, the first end plate 122, and the second end plate 123 is broken when the single cell 110 is placed in the accommodating cavity 125.

In addition, when the welding strength and pre-tightening force satisfy the above relationships, in addition to the first end plate 122 and the second end plate 123 being able to support the single cell 110, it can also avoid the problem that the first end plate 122 and the second end plate 123 squeeze and damage the single cell 110 due to that the force exerted by the first end plate 122 and the second end plate 123 on the single cell 110 is too large. That is, the battery module 100 provided in the embodiments of the present application can ensure the installation reliability of the single cell 110 and avoid the damage to the single cell 110.

It should be noted that the pre-tightening force may be applied to the first end plate 122 and the second end plate 123 by a fixture when welding the first end plate 122 to the side plate 124 and welding the second end plate 123 to the side plate 124; after the welding is completed, the force exerted by the fixture on the first end plate 122 and the second end plate 123 may be retained, and when the single cell 110 is installed subsequently, the pre-tightening force may be applied to the single cell 110 again.

In addition, in some embodiments, as shown in FIG. 2, a buffer pad 113 may be provided between at least some of the two adjacent single cells 110.

A buffer pad 113 is provided between two adjacent single cells 110, and the buffer pad 113 may absorb the impact between the single cells 110, avoiding the problem that the single cells 110 collide with each other and are damaged due to the shaking of the vehicle during the driving process of the vehicle. Furthermore, the arrangement of the buffer pad 113 may also provide a certain expandable space for the single cells 110, avoiding the problem that the single cells 110 expand and squeeze each other to cause damage to the single cells 110 as the battery module 100 charges and discharges.

It should be noted that the number of the single cells 110 is plural, and the buffer pad 113 may be arranged between some adjacent single cells 110 among the plurality of single cells 110, or may be arranged between all adjacent single cells 110 among the plurality of single cells 110. The specific arrangement position of the buffer pad 113 is not specifically limited in the embodiments of the present application.

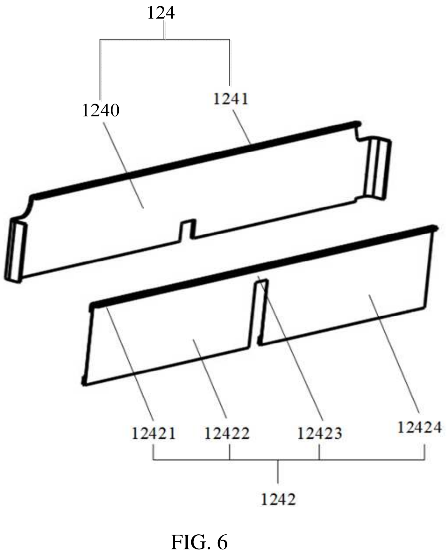

In addition, in some embodiments, as shown in FIG. 6, the side plate 124 may include a main body 1240 and a first bent structure 1241 on a side close to the top cover 121, and the first bent structure 1241 extends from the main body 1240 toward a direction close to the top cover 121 and snap-engages with the top cover 121.

The side plate 124 includes a main body 1240 and a first bent structure 1241 on the side close to the top cover 121, and the first bent structure 1241 extends from the main body 1240 toward the direction close to the top cover 121. This means that the first bent structure 1241 is located on a side of the side plate 124 close to the top cover 121, the first bent structure 1241 may snap-engage with the top cover 121, thereby facilitating the connection between the top cover 121 and the side plate 124.

Specifically, a snap fastener 1213 may be provided on a side edge of the top cover 121 close to the side plate 124, and the snap fastener 1213 may cooperate with the first bent structure 1241 to enable the side plate 124 to snap-engage with the top cover 121.

In addition, in some embodiments, at least one of the main body 1240 and the first bent structure 1241 may be provided with an insulating film 1242, and the insulating film 1242 is bonded to the single cell 110.

At least one of the main body 1240 and the first bent structure 1241 is further provided with an insulating film 1242; the insulating film 1242 may be adhesively connected to the single cell 110, and the insulating film 1242 extends along the first direction and is consistent with a distribution direction of the single cell 110. The plurality of single cells 110 may all be connected to the insulating film 1242, which can prevent the formation of a circuit between the plurality of single cells 110 and the occurrence of a short-circuit phenomenon, enabling the battery module 100 to be relatively safe. Thereby, even if leakage occurs in one of the plurality of single cells 110, the safety of the battery module 100 can still be ensured.

It should be noted that the insulating film 1242 may be provided on the main body 1240, or the insulating film 1242 may be provided on the first bent structure 1241, or alternatively, the insulating film 1242 may be provided on both the main body 1240 and the first bent structure 1241. When the insulating film 1242 is provided on the main body 1240, or on both the main body and the first bent structure 1241, an adhesive area between the insulating film 1242 and the single cell 110 is relatively large, and the safety of the battery module 100 is relatively good.

When the insulating film 1242 includes a part provided on the first bent structure 1241, the insulating film 1242 may also have a second bent structure 12421 corresponding to the first bent structure 1241, and the second bent structure 12421 is located between the first bent structure 1241 and the single cell 110.

In addition, in some embodiments, the battery module may further include an insulating separator, and the insulating separator is provided between the single cell close to the first end plate and the first end plate.

In addition, in some embodiments, the battery module may further include an insulating separator, and the insulating separator is provided between the single cell close to the second end plate and the second end plate.

In addition, in some embodiments, the battery module may further include insulating separators; the insulating separators are provided between the single cell close to the first end plate and the first end plate, and also provided between the single cell close to the second end plate and the second end plate.

That is, an insulating separator 150 may be provided between the single cell 110 close to the first end plate 122 and the first end plate 122; alternatively, an insulating separator 150 may be provided between the single cell 110 close to the second end plate 123 and the second end plate 123; or alternatively, the insulating separator 150 may be provided both at a position close to the first end plate 122 and at a position close to the second end plate 123.

An insulating separator 150 is provided between the single cell 110 close to the first end plate 122 and the first end plate 122, and also an insulating separator 150 is provided between the single cell 110 close to the second end plate 123 and the second end plate 123. This may insulate the single cell 110 from the first end plate 122 and the second end plate 123, and avoid the reduction of the insulation performance of the battery module 100 when the single cell 110 directly abuts against the first end plate 122 and the second end plate 123. That is, the arrangement of the insulating separator 150 may effectively insulate the single cell 110 from the first end plate 122 and the second end plate 123, and reduce the probability of insulation failure between the single cell 110 and the first and second end plates 122, 123.

In addition, in some embodiments, as shown in FIGS. 1 and 2, the protective casing 120 may further include a third end plate 130; the third end plate 130 is provided between the first end plate 122 and the second end plate 123, and has a gap both between it and the first end plate 122 and between it and the second end plate 123. The third end plate 130 may be connected with the side plate 124 through a pin, a screw, etc. The third end plate 130 may play a positioning function; part of the plurality of single cells 110 may be located between the third end plate 130 and the first end plate 122, and another part may be located between the third end plate 130 and the second end plate 123. The single cells 110 located on both sides of the third end plate 130 may abut against the third end plate 130, and since the third end plate 130 is arranged between the plurality of single cells 110, the third end plate 130 may also play a buffering function, which can prevent the two parts of single cells 110 from squeezing each other and reduce the number of single cells 110 that are squeezed. In addition, the arrangement of the third end plate 130 can also increase the strength of the protective casing 120.

In addition, as shown in FIG. 1, when the protective casing 120 may further include the third end plate 130, the top cover 121 may also be divided into a first top cover 1211 located between the third end plate 130 and the first end plate 122, and a second top cover 1212 located between the third end plate 130 and the second end plate 123, according to the arrangement position of the third end plate 130. As shown in FIG. 6, the insulating film 1242 may also be arranged according to the position of the third end plate 130, so that in addition to the second bent structure 12421, the insulating film 1242 may further include a first part 12422 located between the third end plate 130 and the first end plate 122, a second part 12424 located between the third end plate 130 and the second end plate 123, and a connecting part 12423. The first part 12422 and the second part 12424 may be connected together through the connecting part 12423.

In the embodiments of the present application, the battery module 100 includes a plurality of single cells 110 and a protective casing 120. Where the protective casing 120 includes a first end plate 122 and a second end plate 123 arranged along a first direction; two side plates 124 arranged at intervals along a second direction; and a top cover 121. The top cover 121 is connected to a same side of the first end plate 122, the second end plate 123, and the two side plates 124 along a third direction, so that the top cover 121, the first end plate 122, the second end plate 123, and the two side plates 124 may define an accommodating cavity 125. The plurality of single cells 110 may be arranged in the accommodating cavity 125 along the first direction and connected to the side plates 124. Among the plurality of single cells 110, the single cells 110 at two ends may abut against the first end plate 122 and the second end plate 123 respectively, so that the plurality of single cells 110 may be located in the protective casing 120 to form the battery module 100. A total weight of the plurality of single cells 110 is $M_1$ kg, and the weight of the protective casing 120 is $M_2$ kg, where $0.05 \leq M_2/M_1 \leq 0.25$. This enables the protective casing 120 to protect the single cells 110, and also allows the protective casing 120 to have a relatively small weight, thereby enabling the battery module 100 to have a relatively small weight, reducing the impact of the battery module 100 on the weight of the new energy vehicle, and avoiding the problem that the weight of the new energy vehicle is relatively large due to the arrangement of the battery module 100.

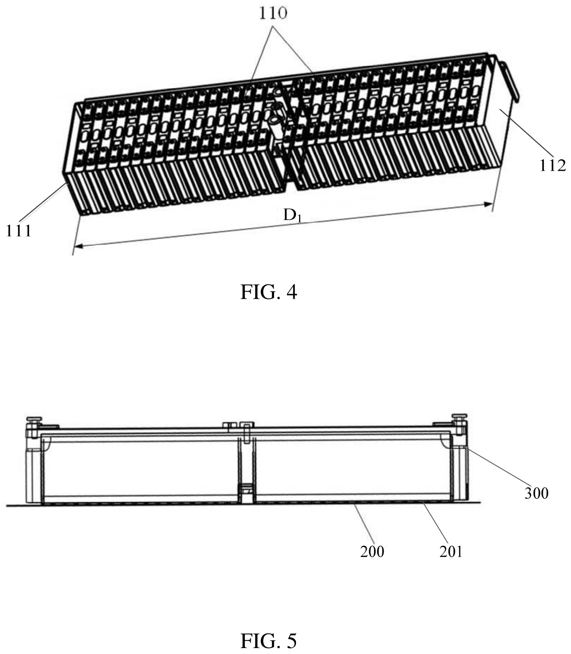

In addition, the embodiments of the present application also provide a battery pack. As shown in FIG. 5, the battery pack includes an enclosing box 300 and the battery module 100 according to any one of the above embodiments, and the battery module 100 may be located in the enclosing box 300.

The battery pack includes the enclosing box 300 and the battery module 100, and the battery module 100 may be provided in the enclosing box 300, so that the connection between the battery module 100 and the vehicle may be realized by installing the battery pack on the vehicle. Since $0.05 \leq M_2/M_1 \leq 0.25$ in the battery module 100, the weight of the battery module 100 is relatively small; therefore, the weight of the vehicle equipped with the battery pack is relatively small, which can enable the vehicle to have better endurance capacity and lower usage cost.

In addition, in some embodiments, as shown in FIG. 5, the battery pack may include a liquid cooling plate 200; the liquid cooling plate 200 is arranged on a side of the single cell 110 away from the top cover 121, and the liquid cooling plate 200 is bonded to the single cell 110 through a thermal conductive adhesive 201.

The battery pack includes the liquid cooling plate 200; the liquid cooling plate 200 is arranged on a side of the single cell 110 away from the top cover 121 and is bonded to the single cell 110 through the thermal conductive adhesive 201. The single cell 110 may be cooled down by the liquid cooling plate 200, which avoids excessive heat generation of the single cell 110 during operation to result in poor battery performance and avoids potential safety hazards.

Examples 1-12:

A battery pack is provided, which includes an enclosing box and a plurality of battery modules 100. Where each battery module 100 includes a protective casing 120 and thirty-four single cells 110. The protective casing 120 includes a top cover 121, a first end plate 122, a second end plate 123, and two side plates 124. The first end plate 122 and the second end plate 123 are arranged at intervals along the first direction; the two side plates 124 are arranged at intervals along the second direction and connected between the first end plate 122 and the second end plate 123; the top cover 121 is connected to the same side of the first end plate 122, the second end plate 123, and the two side plates 124 along the third direction, and together they define an accommodating cavity 125. The thirty-four single cells 110 are arranged in the accommodating cavity 125 along the first direction, and the single cells 110 are connected to the side plates 124; the single cells 110 at the two ends abut against the first end plate 122 and the second end plate 123 respectively.

Where, GB38031-2020 is adopted to conduct a simulated collision test on the battery pack of each example, and the obtained data are shown in Table 1 below:

Table 1

| Example | $M_1$ | M2 | $M_3$ | M4 | $M_2/M_1$ | $M_3/M_4$ | Energy density (W·h/kg) | Safety |
|---|---|---|---|---|---|---|---|---|
| Example 1 | 5 | 1 | 0.2 | 0.147 | 0.20 | 1.36 | 140.8 | Satisfied |
| Example 2 | 10 | 1 | 0.2 | 0.294 | 0.10 | 0.68 | 150.6 | Satisfied |
| Example 3 | 15 | 1 | 0.2 | 0.441 | 0.07 | 0.45 | 153.0 | Satisfied |

(continued)

| Example | $M_1$ | M2 | $M_3$ | M4 | $M_2/M_1$ | $M_3/M_4$ | Energy density (W·h/kg) | Safety |
|---|---|---|---|---|---|---|---|---|
| Example 4 | 28 | 1.4 | 0.2 | 0.824 | 0.05 | 0.24 | 161.5 | Satisfied |
| Example 5 | 32 | 5 | 0.2 | 0.941 | 0.16 | 0.21 | 140.8 | Satisfied |
| Example 6 | 28 | 3 | 0.2 | 0.824 | 0.11 | 0.24 | 149.0 | Satisfied |
| Example 7 | 28 | 5 | 0.2 | 0.824 | 0.18 | 0.24 | 141.2 | Satisfied |
| Example 8 | 28 | 7 | 0.2 | 0.824 | 0.25 | 0.24 | 138.4 | Satisfied |
| Example 9 | 8 | 0.5 | 0.2 | 0.235 | 0.06 | 0.85 | 148.0 | Satisfied |
| Example 10 | 10 | 1 | 0.4 | 0.294 | 0.10 | 1.36 | 149.6 | Satisfied |
| Example 11 | 10 | 1 | 0.9 | 0.294 | 0.10 | 3.06 | 148.3 | Satisfied |
| Example 12 | 10 | 1 | 1.4 | 0.294 | 0.10 | 4.76 | 147.8 | Satisfied |

It can be known from the above data that within the range of $0.05 \leq M_2/M_1 \leq 0.25$, the smaller the value of $M_2/M_1$ is, the higher the gravimetric energy density of the battery pack is; within the range of $0.2 \leq M_3/M_4 \leq 5$, the smaller the value of $M_3/M_4$ is, the higher the gravimetric energy density of the battery pack is, and at this time, all the battery packs can meet the safety requirements.

Comparative Examples 1-7:

A battery pack is provided, which includes an enclosing box 300 and a plurality of battery modules 100. Where each battery module 100 includes a protective casing 120 and thirty-four single cells 110. The protective casing 120 includes a top cover 121, a first end plate 122, a second end plate 123, and two side plates 124. The first end plate 122 and the second end plate 123 are arranged at intervals along the first direction; the two side plates 124 are arranged at intervals along the second direction and connected between the first end plate 122 and the second end plate 123; the top cover 121 is connected to the same side of the first end plate 122, the second end plate 123, and the two side plates 124 along the third direction, and together they define an accommodating cavity 125. The thirty-four single cells 110 are arranged in the accommodating cavity 125 along the first direction, and the single cells 110 are connected to the side plates 124; the single cells 110 at two ends abut against the first end plate 122 and the second end plate 123 respectively. Where, GB38031-2020 is adopted to conduct a simulated collision test on the battery pack of each comparative example, and the obtained data are shown in Table 2 below:

Table 2

| Comparative example | $M_1$ | M2 | $M_3$ | M4 | $M_2/M_1$ | $M_3/M_4$ | Energy density (W·h/kg) | Safety |
|---|---|---|---|---|---|---|---|---|
| Comparative example 1 | 5 | 1.4 | 0.8 | 0.147 | 0.28 | 5.44 | 135.2 | Satisfied |
| Comparative example 2 | 5 | 2.4 | 0.8 | 0.147 | 0.48 | 5.44 | 133.4 | Satisfied |
| Comparative example 3 | 5 | 5 | 0.8 | 0.147 | 1.00 | 5.44 | 132.1 | Satisfied |
| Comparative example 4 | 10 | 5 | 2 | 0.294 | 0.50 | 6.80 | 133.1 | Satisfied |
| Comparative example 5 | 13 | 5 | 2 | 0.382 | 0.38 | 5.23 | 134.5 | Satisfied |
| Comparative example 6 | 10 | 5 | 4 | 0.294 | 0.50 | 13.60 | 133.5 | Satisfied |
| Comparative example 7 | 10 | 5 | 6 | 0.294 | 0.50 | 20.40 | 133.3 | Satisfied |
| Comparative example 8 | 28 | 1 | 0.2 | 0.824 | 0.04 | 0.24 | 163.6 | Not satisfied |
| Comparative example 9 | 32 | 1 | 0.2 | 0.941 | 0.03 | 0.21 | 164.1 | Not satisfied |

It can be known from the above data that when the value of $M_2/M_1$ is less than 0.05, although the energy density of the battery pack is relatively high, the safety of the battery pack cannot be satisfied at this time; when the value of $M_2/M_1$ is greater than 0.25, although the battery pack can meet the safety requirements, the energy density at this time is worse than that of the examples.
It should be noted that the various examples in this description are described in a progressive manner, and each example focuses on the differences from other examples; the same or similar parts between the various examples can refer to each other.

Although optional embodiments of the embodiments of the present application have been described, those skilled in the art can make additional changes and modifications to these embodiments once they learn the basic inventive concept. Therefore, the appended claims are intended to be interpreted as including the optional embodiments and all changes and modifications falling within the scope of the embodiments of the present application.

Finally, it should also be noted that, herein, relational terms such as "first" and "second" are only used to distinguish one entity from another, and do not necessarily require or imply that there is any such actual relationship or order between these entities. Moreover, the terms "comprise", "include" or any other variants thereof are intended to cover non-exclusive inclusion, so that an article or a terminal device including a series of elements not only includes those elements, but also includes other elements not explicitly listed, or also includes elements inherent to the article or the terminal device. Without more restrictions, an element defined by the sentence "comprises one..." does not exclude that there are other identical elements in the article or terminal device including the element.

The terms "one embodiment", "an embodiment" or "one or more embodiments" referred to herein mean that a specific feature, structure or characteristic described in combination with the embodiment is included in at least one embodiment of the present application. In addition, it should be noted that the embodiment of the phrase "in an embodiment" does not necessarily all refer to the same embodiment.

In the description provided herein, a large number of specific details are explained. However, it can be understood that the embodiments of the present application can be practiced without these specific details. In some instances, well-known methods, structures and technologies are not shown in detail so as not to obscure the understanding of this specification.

Finally, it should be noted that the foregoing embodiments are merely intended for describing the technical solutions of the present application other than limiting the present application. Although the present application is described in detail with reference to the foregoing embodiments, persons of ordinary skill in the art should understand that they may still make modifications to the technical solutions described in the foregoing embodiments or make equivalent substitutions to some technical features therein, and these modifications or substitutions do not make the essence of the corresponding technical solutions depart from the spirit and scope of the technical solutions of the embodiments of the present application.

## Claims

1. A battery module, wherein the battery module has a first direction, a second direction and a third direction that intersect with each other pairwise; the battery module comprises a plurality of single cells and a protective casing; the protective casing comprises a top cover, a first end plate, a second end plate and a plurality of side plates; the first end plate and the second end plate are arranged at intervals along the first direction; the plurality of side plates are arranged at intervals along the second direction and connected between the first end plate and the second end plate; the top cover is connected to a same side of the first end plate, the second end plate and the plurality of side plates along the third direction, and together they define an accommodating cavity;

   the plurality of single cells are arranged in the accommodating cavity along the first direction, and the single cells are connected to the side plates; the single cells at two end abut against the first end plate and the second end plate respectively;
   wherein, a total weight of the plurality of single cells is $M_1$ kg, and a weight of the protective casing is $M_2$ kg, satisfying: $0.05 \leq M_2/M_1 \leq 0.25$.

2. The battery module according to claim 1, wherein $M_1$ satisfies: $5 \leq M_1 \leq 30$.

3. The battery module according to claim 1, wherein $M_2$ satisfies: $0.25 \leq M_2 \leq 7.5$.

4. The battery module according to claim 1, wherein $M_1$ satisfies: $5 \leq M_1 \leq 30$, and $M_2$ satisfies: $0.25 \leq M_2 \leq 7.5$.

5. The battery module according to claim 1, wherein the plurality of single cells have a first end surface and a second end surface that are oppositely arranged along the first direction; a distance between the first end surface and the second end surface is $D_1$ mm; a minimum distance between the first end plate and the second end plate along the first direction is $D_2$ mm, satisfying: $1 \leq D_1/D_2 \leq 1.1$.

6. The battery module according to claim 1, wherein an adhesive layer is provided between the single cell and the side plate; an adhesive strength of the adhesive layer comprises a tensile strength $W_1$ MPa and a shear strength $W_2$ MPa,

satisfying: $W_1/M_1 \geq 0.1$, $W_2/M_1 \geq 0.1$.

7. The battery module according to claim 1, wherein an adhesive layer is provided between the single cell and the side plate; a weight of the adhesive layer is $M_3$ g, and a weight of the single cell is $M_4$ kg, satisfying the following relationship: $0.2 \leq M_3/M_4 \leq 5$.

8. The battery module according to claim 1, wherein two ends of the side plate are respectively welded and fixed to the first end plate and the second end plate;
a first welding strength between the first end plate and the side plate is $F_1$ MPa, and a second welding strength between the second end plate and the side plate is $F_2$ MPa, satisfying: $F_1/M_1 \geq 0.2$, and $F_2/M_1 \geq 0.2$.

9. The battery module according to claim 1, wherein a buffer pad is provided between at least some adjacent two single cells.

10. The battery module according to claim 1, wherein the side plate comprises a main body and a first bent structure on a side close to the top cover; the first bent structure extends from the main body toward a direction close to the top cover and snap-engages with the top cover.

11. The battery module according to claim 10, wherein at least one of the main body and the first bent structure is provided with an insulating film, and the insulating film is bonded to the single cell.

12. The battery module according to claim 11, wherein the insulating film has a second bent structure corresponding to the first bent structure, and the second bent structure is located between the first bent structure and the single cell.

13. The battery module according to claim 1, wherein the battery module further comprises an insulating separator; and the insulating separator is arranged between the single cell close to the first end plate and the first end plate.

14. The battery module according to claim 1, wherein the battery module further comprises an insulating separator; and the insulating separator is arranged between the single cell close to the second end plate and the second end plate.

15. The battery module according to claim 1, wherein the battery module further comprises an insulating separator; the insulating separator is arranged between the single cell close to the first end plate and the first end plate, and between the single cell close to the second end plate and the second end plate.

16. A battery pack, wherein the battery pack comprises an enclosing box and the battery module according to any one of claims 1-15, and the battery module is located in the enclosing box.

17. The battery pack according to claim 16, wherein the battery pack comprises a liquid cooling plate; the liquid cooling plate is arranged on a side of the single cell away from the top cover, and the liquid cooling plate is bonded to the single cell through a thermal conductive adhesive.

FIG. 1

FIG. 2

FIG. 3

FIG. 4

FIG. 5

FIG. 6

## INTERNATIONAL SEARCH REPORT

| International application No. |
|---|
| **PCT/CN2024/070431** |

| A. | CLASSIFICATION OF SUBJECT MATTER |
|---|---|
| | H01M10/613(2014.01)i;  H01M10/6567(2014.01)i |

According to International Patent Classification (IPC) or to both national classification and IPC

| B. | FIELDS SEARCHED |
|---|---|

Minimum documentation searched (classification system followed by classification symbols)

    IPC:H01M

Documentation searched other than minimum documentation to the extent that such documents are included in the fields searched

Electronic data base consulted during the international search (name of data base and, where practicable, search terms used)

    CNTXT, WPABSC, ENTXTC, VEN, CNKI: 电池箱, 电池壳, 电池盒, 重量, 轻量, 粘结, 粘接, battery, box, casing, shell, weight, bind+, bond+

| C. | DOCUMENTS CONSIDERED TO BE RELEVANT | | |
|---|---|---|---|
| Category* | Citation of document, with indication, where appropriate, of the relevant passages | | Relevant to claim No. |
| PX | CN 219937157 U (SUNWODA POWER TECHNOLOGY CO., LTD.) 31 October 2023 (2023-10-31)<br>    claims 1-11 | | 1-17 |
| X | CN 107039613 A (JIANGSU YINJI ENCARBON ENERGY TECHNOLOGYCO., LTD.) 11 August 2017 (2017-08-11)<br>    description, paragraphs 3-28, and figures 1-5 | | 1-17 |
| X | CN 109411667 A (GUANGZHOU YINHAN ENERGY TECHNOLOGY CO., LTD.) 01 March 2019 (2019-03-01)<br>    description, paragraphs 4-35, and figures 1-3 | | 1-17 |
| A | CN 217009391 U (SUNWODA HUIZHOU POWER NEW ENERGY CO., LTD.) 19 July 2022 (2022-07-19)<br>    entire document | | 1-17 |
| A | CN 109216600 A (BYD CO., LTD.) 15 January 2019 (2019-01-15)<br>    entire document | | 1-17 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **19 March 2024** | **02 April 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/070431** |

### C.    DOCUMENTS CONSIDERED TO BE RELEVANT

| Category* | Citation of document, with indication, where appropriate, of the relevant passages | Relevant to claim No. |
| --- | --- | --- |
| A | CN 111900292 A (NINGDE CONTEMPORARY AMPEREX TECHNOLOGY CO., LTD.) 06 November 2020 (2020-11-06) entire document | 1-17 |

Form PCT/ISA/210 (second sheet) (July 2022)

**INTERNATIONAL SEARCH REPORT**
Information on patent family members

| International application No. |
| --- |
| **PCT/CN2024/070431** |

| Patent document cited in search report | | | Publication date (day/month/year) | Patent family member(s) | | | Publication date (day/month/year) |
| --- | --- | --- | --- | --- | --- | --- | --- |
| CN | 219937157 | U | 31 October 2023 | None | | | |
| CN | 107039613 | A | 11 August 2017 | None | | | |
| CN | 109411667 | A | 01 March 2019 | CN | 209169233 | U | 26 July 2019 |
| CN | 217009391 | U | 19 July 2022 | None | | | |
| CN | 109216600 | A | 15 January 2019 | KR | 20200020873 | A | 26 February 2020 |
| | | | | KR | 102271654 | B1 | 02 July 2021 |
| | | | | EP | 3648219 | A1 | 06 May 2020 |
| | | | | EP | 3648219 | A4 | 17 June 2020 |
| | | | | EP | 3648219 | B1 | 03 August 2022 |
| | | | | US | 2021159576 | A1 | 27 May 2021 |
| | | | | US | 11335982 | B2 | 17 May 2022 |
| | | | | WO | 2019001384 | A1 | 03 January 2019 |
| | | | | JP | 2020525996 | A | 27 August 2020 |
| | | | | JP | 6858304 | B2 | 14 April 2021 |
| CN | 111900292 | A | 06 November 2020 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202321135535
- GB 380312020 A